# EUROPEAN PATENT SPECIFICATION

(11) **EP 3 340 015 B1**
(45) Date of publication and mention of the grant of the patent: **23.09.2020**
(21) Application number: 17205267.2
(22) Date of filing: 04.12.2017
(51) Int. Cl.: G06F 3/01, G06F 3/048, G06F 3/0482, G06F 3/0481, G06F 3/0484

(54) **DISPLAY DEVICE FOR ADJUSTING TRANSPARENCY OF INDICATED OBJECT AND DISPLAY METHOD FOR THE SAME**
ANZEIGEVORRICHTUNG ZUR ANPASSUNG DER TRANSPARENZ EINES ANGEZEIGTEN OBJEKTS UND ANZEIGEVERFAHREN DAFÜR
DISPOSITIF D'AFFICHAGE DE RÉGLAGE DE LA TRANSPARENCE DE L'OBJET INDIQUÉ ET PROCÉDÉ D'AFFICHAGE ASSOCIÉ

(30) Priority: 20.12.2016 KR 20160174702
(43) Date of publication of application: 27.06.2018
(73) Proprietor: Samsung Electronics Co., Ltd., Gyeonggi-do 16677 (KR)
(72) Inventor: SEO, Jang Won, Seoul (KR); JEON, Eun Jung, 10417 Gyeonggi-do (KR)
(74) Representative: Appleyard Lees IP LLP

(56) References cited:
- WO-A1-2015/174316
- US-A1- 2006 010 099
- US-A1- 2014 310 653

## Description

### 1. FIELD

Methods and apparatuses consistent with exemplary embodiments relate to adjusting transparency of an indicated object on a display device, providing an interface screen corresponding to a user input, and a display method for the same.

### 2. BACKGROUND

A remote controller may include one or more arrow keys. A user may manipulate one of the arrow keys to indicate an object on an object list displayed on a display device.

To indicate and select a desired object enrolled on the object list, the user may consecutively manipulate the arrow key of the remote controller for a short period of time or hold the arrow key for a longer period of time.

US 2014/310653 discloses a device and method for executing an application corresponding to a selection area and displaying usage history information. US 2006/010099 A1 discloses a device with a controller that switches between higher level music selection screens displaying items of different attributes, when a mode key is pressed. The device controller switches from higher level music selection screen to lower level music selection screen displaying items belonging to selected item on higher level music selection screen, when any one of the right direction key, left direction key, up direction key and down direction key is operated.

### SUMMARY

The main embodiment is defined by the independent claims. Additional embodiments are defined by dependent claims. Embodiments that do not fall within the scope of the appended claims do not describe the invention. In the related art, display devices may highlight and display an indicated object on an object list in response to a control signal corresponding to the arrow key of a remote controller. The display device highlights and displays the indicated object by enlarging the indicated object relative to the other objects. When the indicated object is rapidly changed by a long press manipulation, the eyes of a user may be strained due to the fast repeated size change.

Exemplary embodiments may address the above-mentioned problems and/or disadvantages and other disadvantages not described above.

According to the present invention there is provided a display device as in claim 1 and a method of displaying an object by a display device as in claim 10. Additional features will be apparent from the dependent claims and the discussion herein.

According to an aspect of an exemplary embodiment, there is provided a display device including: a display; an input interface; and a processor configured to: control the display to display a plurality of objects; display an indicated object of the plurality of objects with a first transparency based on a first specified user input and display remaining objects of the plurality of objects with a second transparency while the first specified user input is received; and display the plurality of objects with a same transparency based on the first specified user input stopping.

The processor may be further configured to: determine, in response to consecutively receiving a first user input and a second user input that corresponds to the first user input within a threshold time interval, the second user input as being the first specified user input.

The processor may be further configured to: determine, in response to a receive time interval between the first user input and the second user input being equal to or greater than the threshold time interval, the second user input as the second specified user input.

The processor may be further configured to: control the display to, in response to the second user input being the second specified user input, display the remaining objects as a first size and display the indicated object as a second size exceeding the first size.

The processor may be further configured to: adjust at least one parameter of the indicated object to be different from the remaining objects, the at least one parameter being selected from among a blurring value, a transparency, and an overlap.

The processor may be further configured to: control the display to highlight the indicated object.

The processor may be further configured to: control sizes of the indicated object and the remaining objects to be equal in response to receiving the first specified user input; and control sizes of the remaining objects to be a first size and the indicated object to be a second size greater than the first size in response to reception of the first specified user input stopping.

The processor may be further configured to: increase a size of the indicated object from the second size to a third size and then decrease the size of the indicated object from the third size to the second size in response to reception of the first specified user input stopping.

The processor may be further configured to: control the display to display the remaining objects as two-dimensional images and the indicated object as a three-dimensional image in response to reception of the first specified user input stopping.

The processor may be further configured to: perform bounce-back processing in a first direction or a reverse direction of the first direction with respect to at least one among the indicated object and the remaining objects in response to the indicated object being last on an object list including the plurality of objects when viewed in the first direction.

According to an aspect of another exemplary embodiment, there is provided a method of displaying an object by a display device, the method including: displaying a plurality of objects; determining whether a first specified user input is received; displaying an indicated object of the plurality of objects with a first transparency and remaining objects with a second transparency in response to receiving the first specified user input; and displaying the plurality of objects with a same transparency in response to the first specified user input stopping.

The determining of whether the first specified user input is received may include: consecutively receiving a first user input and a second user input; determining whether the second user input corresponds to the first user input; determining whether a receive time interval between a first time point at which a first signal corresponding to the first user input is received and a second time point at which a second signal corresponding to the second user input is received is less than a threshold time interval; and determining the second user input as being the first specified user input in response to the first user input corresponding to the second user input and the receive time interval being less than the threshold time interval.

The determining of whether the second user input as being the first specified user input may include: determining the second user input as a second specified user input in response to the first user input being different from the second user input; and determining the second user input as the second specified user input in response to the receive time interval being equal to or greater than the threshold time interval.

The method may further include: displaying the remaining objects as a first size and the indicated object as a second size exceeding the first size in response to determining the second user input as the second specified user input.

The displaying of the indicated object with the first transparency and the remaining objects with the second transparency may include: displaying the indicated object and the remaining objects as equal sizes; and adjusting at least one parameter of the indicated object to be different from the remaining objects, the at least one parameter being selected from among a blurring value, a transparency, and an overlap.

The displaying of the plurality of objects with the same transparency may include: displaying the remaining objects in a first size and the indicated object as a second size greater than the first size in response to reception of the first specified user input stopping.

The displaying of the indicated object as the second size in response to reception of the first specified user input stopping may include: increasing a size of the indicated object from the second size to a third size; and decreasing the size of the indicated object from the third size to the second size.

The displaying of the indicated object as the second size in response to reception of the first specified user input stopping may include: displaying the remaining objects as two-dimensional images; and displaying the indicated object as a three-dimensional image.

The displaying of the indicated object as the second size in response to reception of the first specified user input stopping may include: performing bounce-back processing in a first direction or a reverse direction of the first direction with respect to at least one among the indicated object and the remaining objects in response to the indicated object being last on an object list including the plurality of objects when viewed in the first direction.

According to an aspect of yet another exemplary embodiment, there is provided a display device including: a display; an input interface; and a processor configured to determine whether a second input received through the input interface subsequent a first input corresponds to the first input, classify the second input as a first input type or a second input type based on whether the first input corresponds to the second input and a receive time interval between the first input and the second input, control the display to display a plurality of objects, and control a size of an indicated object of the plurality of objects based on whether the second input is the first input type or the second input type.

### BRIEF DESCRIPTION OF THE DRAWINGS

The above and/or other aspects will become more apparent from the following description of exemplary embodiments taken in conjunction with the accompanying drawings, in which:
FIG. 1 is a block diagram illustrating a display device according to an exemplary embodiment;
FIGs. 2A and 2B are views illustrating an object list, according to an exemplary embodiment;
FIGs. 2C and 2D are views illustrating an indicated object that is highlighted, according to an exemplary embodiment;
FIG. 3 is a view illustrating a display device receiving a user input by using a remote controller, according to an exemplary embodiment;
FIG. 4 is a view illustrating a display device receiving a user input by using a touch pad, according to another exemplary embodiment;
FIGs. 5A to 5C are views illustrating a user interface screen corresponding to a long press manipulation, according to an exemplary embodiment; and
FIG. 6 is a flowchart illustrating an object display method according to an exemplary embodiment.

### DETAILED DESCRIPTION

The following detailed description of exemplary embodiments is provided to assist the reader in gaining a comprehensive understanding of the methods, apparatuses, and/or systems described herein. Accordingly, those of ordinary skill in the art will recognize that various modifications, equivalents, and/or alternatives may be made without departing from the scope of the present disclosure. Throughout the drawings, like reference numbers are used to depict the same or similar elements, features, and structures.

Terms of a singular form may include plural forms unless otherwise specified. In the present disclosure, the expressions "A or B", "at least one of A and/or B", "A, B, or C", or at least one of "A, B and/or C" may include all possible combinations of one or more of the associated listed items. Terms such as "first", "second", and the like used herein may refer to various elements regardless of the order and/or priority of the elements and may be used to distinguish an element from another element, not to limit the elements. It will be understood that when an element (e.g., a first element) is referred to as being "operatively coupled with/to", "communicatively coupled with/to", or "connected to" another element (e.g., a second element), the element may be directly coupled with/to or connected to the another element or an intervening element (e.g., a third element) may be interposed there between.

The expressions "adapted to" or "configured to" may be interchangeably used with, for example, the expression "suitable for", "having the capacity to", "changed to", "made to", "capable of", "designed to", "adapted to", "made to", or "capable of". The expression "a device configured to" may mean that the device is "capable of" operating together with another device or other components. For example, a "processor configured to (or adapted to) perform A, B, and C" may mean a dedicated processor (e.g., an embedded processor) for performing a corresponding operation or a generic-purpose processor (e.g., a central processing unit (CPU) or an application processor) which may perform corresponding operations by executing one or more software programs which are stored in a memory device

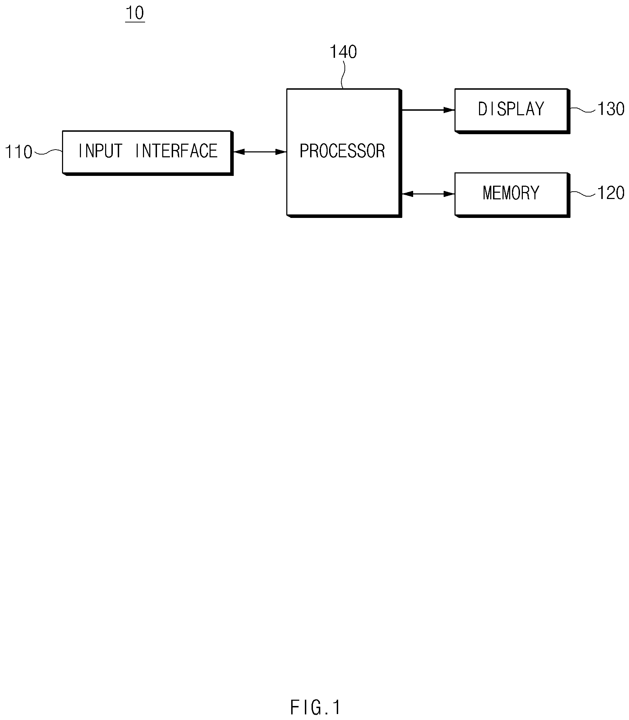

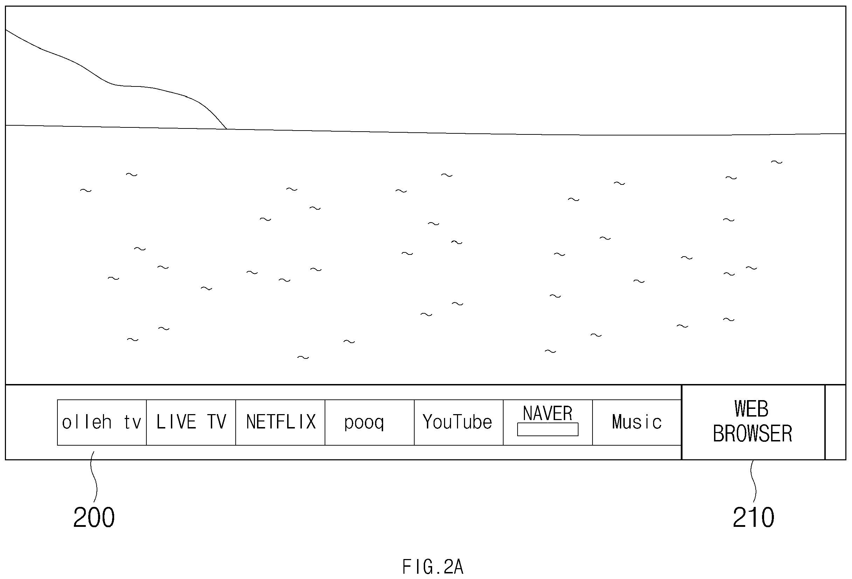

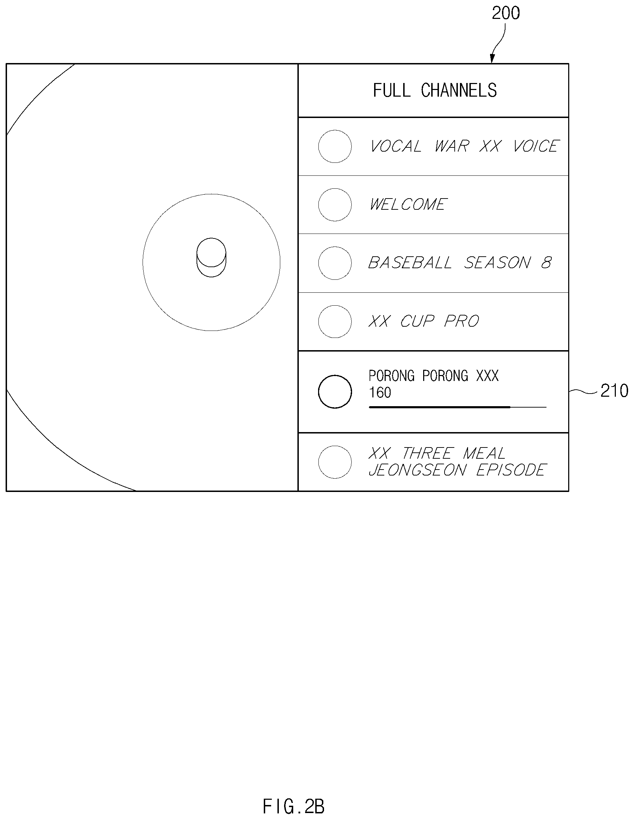

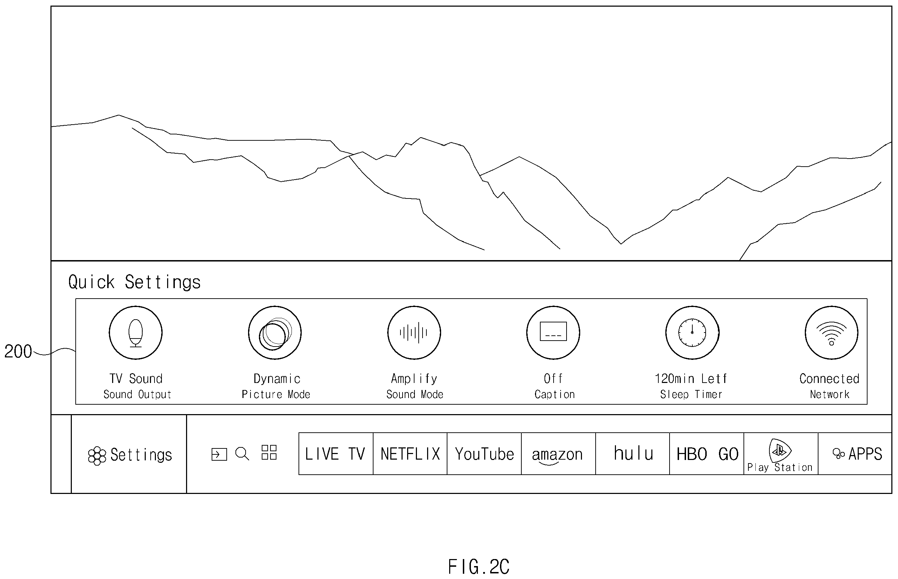

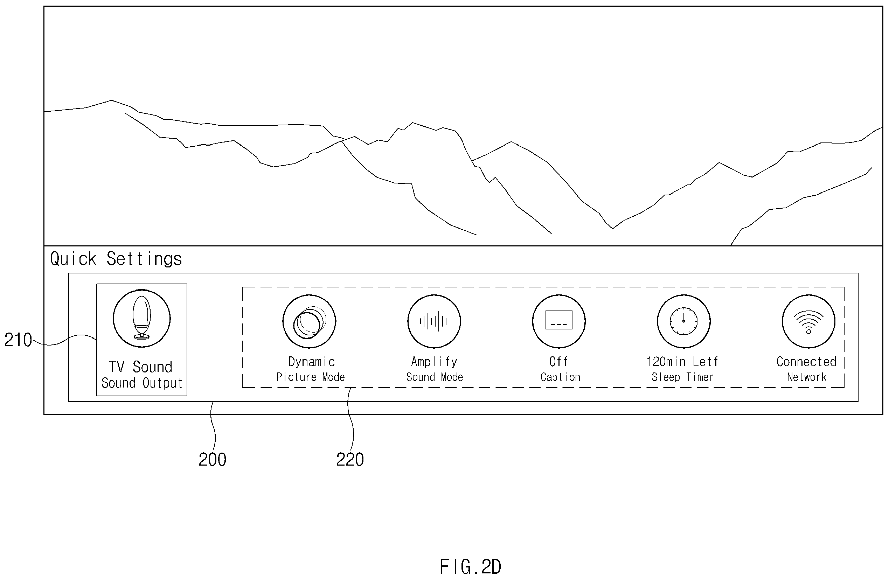

FIG. 1 is a block diagram illustrating a display device, according to an exemplary embodiment, FIGs. 2A and 2B are views illustrating an object list, according to an exemplary embodiment, and FIGs. 2C and 2D are views illustrating highlighting of an indicated object, according to an exemplary embodiment.

Referring to FIG. 1, according to an exemplary embodiment, a display device 10 may include an input interface 110, a display 130, a memory 120, and a processor 140. According to various exemplary embodiments, some elements may be omitted or additional elements may be provided. In addition, according to an exemplary embodiment, some of the elements may be combined with each other so as to form one entity and the functions of the elements may be performed in the same manner as before the combination. The input and output relationship described with reference to FIG. 1 is illustrated for convenience of explanation, and exemplary embodiments are not limited thereto.

According to various exemplary embodiments, the display device 10 may be, for example, a television (TV), a monitor, a laptop computer, a large format display (LFD), a smartphone, a tablet personal computer (PC), a mobile phone, a video telephone, an e-book reader, a desktop personal computer, a laptop personal computer, a netbook computer, a personal digital assistant (PDA), a portable multimedia player (PMP), an MP3 player, a camera, a wearable device, or an electronic picture frame.

According to an exemplary embodiment, the input interface 110 may be configured to receive a user input. For example, the input interface 110 may include at least one of a touch sensor, a communication interface, or an input button.

According to an exemplary embodiment, the touch sensor may sense the touch of a touch sensitive surface and may output touch coordinates of the touch sensitive surface. For example, the touch sensor may include at least one of a touch pad (or a touch panel) or a touch controller. The touch sensor may be a touch screen.

According to an exemplary embodiment, the communication interface may communicate with a remote controller. The communication interface may be a transceiver (transmitter and receiver), and communicate with the remote controller through various short range communication schemes such as Bluetooth, near-field communication (NFC), and infrared (IR) communication. According to an exemplary embodiment, the communication interface may transform generate a control signal which is able to be analyzed by the processor 140 based on a signal received from the remote controller. In addition, the communication interface may generate an instruction signal based on a signal received from the processor 140, and transmit the instruction signal to the remote controller using a corresponding communication scheme.

According to an exemplary embodiment, the input button may be a button provided on the display device 10 or connected with an external interface (e.g., High-Definition Multimedia Interface (HDMI)) of the display device 10. In the latter case, a signal from the input button may be transmitted to the processor 140 through the communication interface (e.g., an HDMI communication interface). The input button may be manipulated by a user and may output a signal corresponding to the manipulated button.

The display 130 may include, for example, a liquid crystal display (LCD), a light-emitting diode (LED) display, an organic LED (OLED) display, or an electronic paper display. The display 130 may display, for example, various contents (e.g., a text, an image, a video, an icon, a symbol, and/or the like) to the user. For example, the display 130 may display an object list including a plurality of objects.

The memory 120 may be a volatile memory (e.g., a random access memory (RAM), or the like), a non-volatile memory (e.g., a read-only memory (ROM), a flash memory, or the like), or the combination thereof. For example, the memory 120 may store instructions or data related to at least one different element of the display device 10.

According to an exemplary embodiment, the memory 120 may store first instructions used to determine whether a user input received by the processor 140 is a long press manipulation or a short press manipulation. For example, the first instructions are used to determine the user input as being a long press manipulation if the processor 140 consecutively receives the same user inputs within a threshold time interval. In addition, the first instructions are used to determine the user input as being a short press manipulation if the processor 140 fails to consecutively receive the same user inputs within the threshold time interval.

According to an exemplary embodiment, the memory 120 may store second instructions allowing the processor 140 to control display of an indicated object according to a long press manipulation. The indicated object may be visually distinguished from other objects. For example, the second instructions may be used to highlight the indicated object than the other objects by using parameters other than size. The memory 120 may store third instructions allowing the processor 140 to control display of an indicated object according to the short press manipulation. The highlight according to the second instructions may be distinguished from the highlight according to the third instructions.

According to an exemplary embodiment, the memory 120 may store fourth instructions allowing the processor 140 to control display of a final object indicated through the long press manipulation while highlighting the final object. For example, the fourth instructions may be used to highlight the final object by using at least one of the size, the movement, or the effect (e.g., a three-dimensional (3D) effect) of the final object

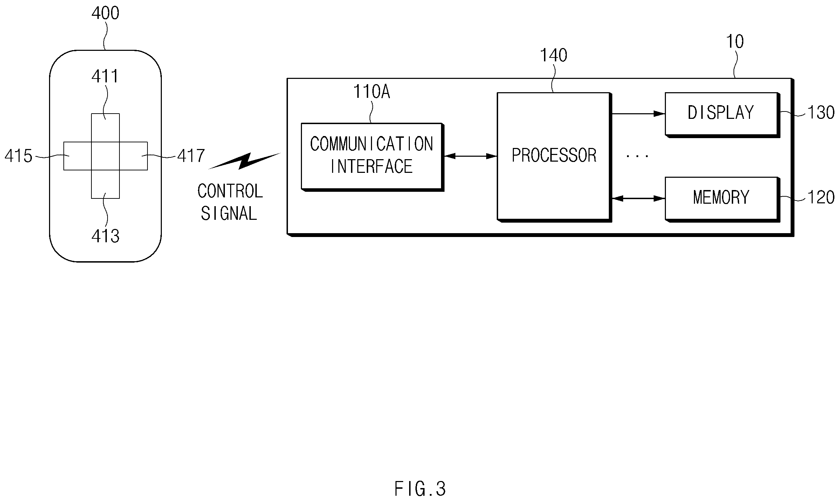

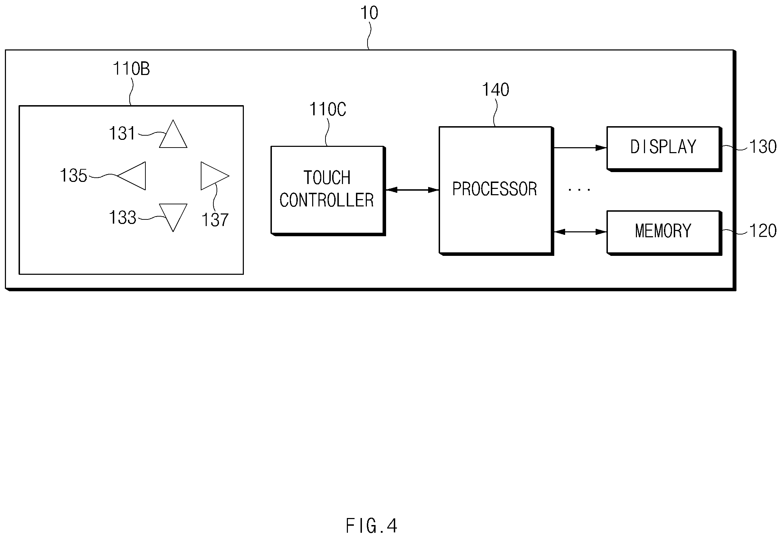

For example, the processor 140 may include, for example, at least one of a central processing unit (CPU), a graphics processing unit (GPU), a micro-processor, application specific integrated circuits (ASICs), or a field programmable gate array (FPGA), also the processor 140 may have a plurality of cores. The processor 140 may perform, for example, computation or data processing related to the control and/or communication of at least one different element of the display device 10. According to an exemplary embodiment, the processor 140 may analyze the user input received through the input interface 110. The procedure of analyzing the user input corresponding to the input interface 110 by the processor 140 will be described later with reference to FIGs. 3 and 4.

According to an exemplary embodiment, the processor 140 may determine whether the user input is the long press manipulation or the short press manipulation when the processor 140 receives the user input through the input interface 110. For example, if first and second user inputs are the same input and sequentially received, the processor 140 may determine a receive time interval between time points at which the first and second user inputs are received. If the receive time interval is less than the threshold time interval, the processor 140 may determine the second user input as being the long press manipulation. Alternatively, if the receive time interval is equal to or greater than the threshold time interval, the second user input may be determined as the short press manipulation. In addition, if the first user input is not the same as the second user input, the processor 140 may determine the second user input as being the short press manipulation. If the second user input is not the same as the first user input, the processor 140 may not determine whether the user input is the long press manipulation or the short press manipulation.

According to an exemplary embodiment, the processor 140 may receive a user input in the state that an object enrolled on the object list is able to be selected (or indicated). According to an exemplary embodiment, the state that the object enrolled on the object list is able to be selected may be, for example, the state that entrance is made into a menu for selecting one object on the object list. According to an exemplary embodiment, the object list may be a function (or content) list. For example, when the display device 10 is a TV, the object list may be at least one of a channel list (see FIGs. 2A and 2B), a content list, or a setting list (see FIGs. 2C and 2D). The object list may be arranged in a lengthwise or widthwise direction on a screen of the display 130. Each object on the object list may include object information (e.g., an object name, an object icon, or the like).

According to an exemplary embodiment, if the processor 140 receives a user input in the state that the object enrolled on the object list is able to be selected (or indicated), the processor 140 may change and specify an indicated object on the object list corresponding to the user input. The processor 140 may highlight and display the indicated object that is specified such that the indicated object according to the user input is able to be distinguished from the other objects (remaining objects). According to an exemplary embodiment, the processor 140 may highlight and display the indicated object in different manners depending on whether the user input is the short press manipulation or the long press manipulation. Hereinafter, referring to FIGs. 2A and 2B, the specification and highlight of the indicated object will be described with reference to FIGs. 2A and 2B.

Referring to FIG. 2A, if the arrangement direction of the object list is a widthwise direction, and the user input is the short press manipulation, the processor 140 may change and specify an indicated object 210 in a left or right direction corresponding to the short press manipulation. The processor 140 may display the other objects (remaining objects), except the indicated object 210, which is specified from an object list 200, in a first size, and may display the indicated object 210 specified through the short press manipulation in a second size exceeding the first size. In FIG. 2A, the object list 200 may include a first object (olleh TV), a second object (live TV), a third object (NETFLIX), a fourth object (POOQ), a fifth object (YouTube), a sixth object (NAVER), a seventh object (Music), and an eighth object (WEB BROWSER).

The indicated object 210 may be, for example, the eighth object (WEB BROWSER), and the other objects may be objects obtained by excluding the indicated object 210 from the object list 200. For example, if the indicated object is "WEB BROWSER", the processor 140 may display "WEB BROWSER" in the second size, and may display the other objects (e.g., "olleh TV", ..., and "Music) in the first size less than the second size. In addition, if the short press manipulation indicates movement in a left direction, the processor 140 may designate the indicated object as "Music" by changing the indicated object to "Music". Then, the processor 140 may decrease the size of the previously indicated object to the first size and may increase the size of the indicated object, "Music", to the second size to display the indicated object. As described above, according to an exemplary embodiment, the short press manipulation may select the indicated object 210 which may be distinguished from the other objects by using a size parameter.

Referring to FIG. 2B, if the arrangement direction of the object list 200 is the lengthwise direction and the user input is the long press manipulation, the processor 140 may change and specify the indicated object 210 on the object list 200 in the up direction or down direction corresponding to the long press manipulation. As illustrated in FIG. 2B, the object list 200 may range from an object of "Vocal war xx voice" to an object of "XX three meal Jeongseon episode" displayed from the top of a full-channel screen to the bottom of the full-channel screen. In this case, the processor 140 may display an indicated object 210 which is indicated through the long press manipulation, with first transparency and may display the other objects (e.g., "XX cup pro" with second transparency. The second transparency may be set to a value exceeding the first transparency. For example, if the transparency is set to 100%, objects (e.g., the indicated object and the other objects) may be transparent and thus not viewed. If the transparency is set to 0%, the objects may be most clearly viewed.

For example, if the long press manipulation indicating movement in the down direction is determined while "Porong Porong xxx" is displayed with the first transparency, the processor 140 may designate the indicated object as "XX three meal Jeongseon episode" instead of "the Porong Porong xxx" by changing the indicated object from "the Porong Porong xxx" to "XX three meal Jeongseon episode" In this case, the processor 140 may display each of the plurality of objects in the object list 200 in equal size. As described above, according to an exemplary embodiment, the processor 140 changes the indicated object based on the long press manipulation by adjusting the transparency of the indicated object without changing the size of the indicated object. In this case, strain on the eyes of the user may be reduced.

According to an exemplary embodiment, the processor 140 may distinguish the indicated object by adjusting at least one parameter of a blurring value, opacity, overlap, saturation, brightness, hue or transparency. For example, as the processor 140 may process the other objects to be less recognizable than the indicated object by using at least one parameter, the processor 140 may highlight the indicated object.

For example, as the processor 140 performs blurring with respect to the other objects by using the blurring value, the processor 140 may highlight the indicated object more than the other objects. For another example, the processor 140 may adjust the transparency of the other objects to make the other objects appear blurred (or may lower the sharpness of other objects). For another example, the processor 140 may perform Dim processing with respect to the other objects such that the other objects overlap, thereby lowering the visibility of other objects. For another example, the processor 140 may reduce the saturation of the other objects to make the other objects in black and white, thereby lowering the visibility of other objects. In addition, the processor 140 may change at least one of the brightness or the hue of the other objects, thereby highlighting the indicated object more than the other objects.

According to an exemplary embodiment, as the processor 140 performs image processing with respect to an indicated object according to the long press manipulation, the processor 140 may highlight the indicated object more than the other objects. Referring to FIG. 2C, if one of the objects in the object list 200 is not indicated, the processor 140 may display all objects in the form of a two-dimensional (2D) image (that may include a text). The 2D image may be an image that is not subject to a three-dimensional (3D) effect. Meanwhile, referring to FIG. 2D, the processor 140 may display the indicated object 210 by changing the form of the indicated object 210 to the form of the 3D image. The 3D image may be an image subject to the 3D effect. The 3D effect may be produced by performing at least one of light and dark processing, shadow effect processing, or coloring with respect to the 2D image. In this case, the processor 140 may display the other objects, which are enrolled on the object list 200, in the form of the 2D image. According to an exemplary embodiment, the image processing for highlighting the indicated object may include changing (e.g., changing the thickness or the color) at least one of an image, a text, or an edge of the indicated object. Therefore, according to an exemplary embodiment, a user interface for distinguishing between object changing procedures in the short press manipulation and the long press manipulation may be provided. In addition, according to an exemplary embodiment, when rapidly changing and specifying an indicated object through the long press manipulation, the processor 140 controls a display, in equal size, of objects including an indicated object on the object list, which may reduce strain on the eyes of the user.

According to an exemplary embodiment, the processor 140 may provide a plurality of user interfaces as the time duration of the long press manipulation elapses. For example, in the case of receiving a user input corresponding to the long press manipulation one time, the processor 140 may provide a first user interface as if the short press manipulation occurs. In other words, the first user interface may be used to display an indicated object according to the user input while highlighting the indicated object by adjusting the size of the indicated object. For example, in the case of receiving a user input corresponding to the long press manipulation a threshold number of times, the processor 140 may provide a second user interface according to the long press manipulation. The second user interface may display the indicated object according to the user input while highlighting the indicated object by using at least one of parameters except the size.

According to an exemplary embodiment, if the indicated object 210 according to the user input is the final object on the object list, the processor 140 may neither change nor specify the indicated object 210 even if a user input is consecutively received according to the long press manipulation. The final object may be an object provided on the final position of the object list in the direction of changing and specifying the indicated object 210 according to the user input. For example, if the direction of changing and specifying the indicated object 210 corresponds to the arrangement direction of the object list, the final object may an object having the last sequence number on the object list. For another example, if the direction of changing and specifying the indicated object 210 is reverse to the arrangement direction of the object list, the final object may be an object having the first sequence number on the object list. According to an exemplary embodiment, when the indicated object 210 is the final object, the processor 140 may perform bounce-back processing with respect to at least one of the indicated object 210 or the other objects in the direction of changing and specifying the object or the reverse direction thereof. The bounce-back processing may be, for example, to apply a bouncing effect to at least one of the indicated object 210 or the other objects in the direction of changing and specifying the indicated object 210 or the reverse direction thereof.

According to an exemplary embodiment, the processor 140 may change and specify the indicated object 210 corresponding to the long press manipulation while determining whether the long press manipulation is continued or stopped. For example, if the processor 140 fails to receive a user input the same as an immediately-previous user input within the threshold time interval, the processor 140 may determine the long press manipulation as being stopped.

According to an exemplary embodiment, if the long press manipulation is stopped, the processor 140 may highlight and display the final object indicated by the long press manipulation. For example, the processor 140 may display the final object while more highlighting the size of the final object than the sizes of the other objects. As another example, the processor 140 may perform bounce-back processing with respect to the final object at least one time in the display direction of the display 130. When performing the bounce-back processing with respect to the final object, the processor 140 may increase the size of the final object from the second size to the third size through a plurality of steps and then decrease the size of the final object from the third size to the second size. The second size may be a size exceeding the sizes of the other objects on the object list. The second size may be equal to or larger than the size for highlighting the indicated object 210 according to the short press manipulation. Therefore, according to an exemplary embodiment, a user interface for distinguishing between the stop of the short press manipulation and the stop of the long press manipulation may be provided.

According to an exemplary embodiment, if the long press manipulation is stopped, the processor 140 may identically process all objects (the indicated object and the other objects) on the object list in terms of at least one parameter (e.g., transparency). Therefore, according to an exemplary embodiment, a user interface for distinguishing between the stop of the short press manipulation and the stop of the long press manipulation may be provided.

According to an exemplary embodiment, if the final object is the last object on the object list, the processor 140 may provide a user interface different from a user interface in the case that the final object is not the last object on the object list. For example, if the final object is the last object on the object list, the processor 140 may perform bounce-back processing with respect to at least one of the final object or the other objects in the direction of changing the indicated object or the reverse direction thereof.

FIG. 3 is a view illustrating the display device receiving a user input by using a remote controller, according to an exemplary embodiment.

Referring to FIG. 3, according to an exemplary embodiment, the input interface 110 may be a communication interface 110A which communicates with a remote controller 40 operated by a user.

According to an exemplary embodiment, the remote controller 40 may include at least one button (up, down, left, and right arrow keys 411, 413, 415, and 417), a touch panel, a motion recognition sensor, or a voice recognition sensor. The remote controller 40 may be dedicated for the display device 10 or may be a multi-controller having an application for controlling the display device 10. According to an exemplary embodiment, the remote controller 40 may transmit a control signal corresponding to a key code in the case that one of provided keys is pressed. If one of the provided keys is consecutively pressed (or the long press manipulation is performed), the remote controller 40 may transmit a key code at the threshold time interval. The threshold time interval may be set to less than a time interval in which control signals are transmitted by the remote controller 40 as the key of the remote controller 40 is manipulated by the user. Accordingly, the processor 140 may distinguish between the long press manipulation and the short press manipulation with respect to the same button by using the threshold time interval.

According to an exemplary embodiment, the processor 140 may examine a key code from the control signal and may perform processing (up direction change, down direction change, right direction change or left direction change) corresponding to the key code (up arrow key, down arrow key, right arrow key or left arrow key). For example, if the key code is a code of the up arrow key 411, the processor 140 may change the indicated object to an object above the currently indicated object. If the key code is a code of the down arrow key 413, the processor 140 may change the indicated object to an object below the currently indicated object. If the key code is a code of the left arrow key 415, the processor 140 may change the indicated object to an object to the left of the currently indicated object. If the key code is a code of the right arrow key 417, the processor 140 may change the indicated object to an object to the right of the currently indicated object.

According to an exemplary embodiment, if the processor 140 consecutively receives a key code the same as an immediately-previous key code, the processor 140 may determine whether the receive time interval between control signals which are consecutively received is less than the threshold time interval. If the receive time interval between the control signals which are consecutively received is less than the threshold time interval, the processor 140 may determine the user input as being the long press manipulation. To the contrary, if the receive time interval between the control signals which are consecutively received is equal to or greater than the threshold time interval, the processor 140 may determine the user input as being the short press manipulation. If the processor 140 fails to consecutively receive the key code the same as the immediately-previous key code, the processor 140 may determine the user input as being the short press manipulation.

Meanwhile, even if the input is received through an input button of the input interface 110, the processor 140 may determine, in a manner similar to when the input is received through the input interface 110 from the remote controller 40, whether a user input is the long press manipulation or the short press manipulation based on the consecutive receive state of a manipulation signal corresponding to the user input and the receive time interval between manipulation signals. However, in the case that the input interface 110 is the input button, the processor 140 may directly receive the manipulation signal from the input button. If the input button is provided in an external device (e.g., a set-top box) connected with an external interface of the display device 10, the processor 140 may receive the manipulation signal from the input button through the communication interface 110A.

FIG. 4 is a view illustrating a display device with a touch pad configured to receive a user input, according to another exemplary embodiment.

Referring to FIG. 4, according to another exemplary embodiment, the input interface 110 may include a touch pad 110B and a touch controller 110C. According to an exemplary embodiment, the touch pad 110B may be manipulated by a user (e.g., the finger of the user). According to an exemplary embodiment, the touch pad 110B may be a touch screen formed on the display 130. According to an exemplary embodiment, the touch controller 110C (e.g., a touch screen panel sensor) may control the touch pad 110B to output the touch coordinates of the touch pad 110b. According to another exemplary embodiment, the display 130 may display manipulation areas 131, 133, 135, and 137 for the long press manipulation and the short press manipulation on the screen of the display 130.

According to another exemplary embodiment, if receiving the touch coordinates, the processor 140 may determine whether the touch coordinates are positioned on the manipulation area 131, 133, 135, or 137. If the touch coordinates are positioned on one of the manipulation areas 131, 133, 135, or 137, the processor 140 may perform processing for the manipulation area 131, 133, 135, or 137 corresponding to the touch coordinates. For example, if the touch coordinates are positioned on the manipulation area 131 corresponding to an up arrow key, the processor 140 may change an indicated object to an object above the currently indicated object on an object list. If the touch coordinates are positioned on the manipulation area 133 corresponding to a down direction key, the processor 140 may change the indicated object to object below the currently indicated object on the object list. If the touch coordinates are positioned on the manipulation area 135 corresponding to a left arrow key, the processor 140 may change the indicated object to an object to the left of the currently indicated object on the object list. If the touch coordinates are positioned on the manipulation area 137 corresponding to a right arrow key, the processor 140 may change the indicated object to an object to the right of the currently indicated object on the object list.

According to another exemplary embodiment, if the processor 140 consecutively receives touch coordinates corresponding to the same manipulation area, the processor 140 may determine whether the user input is the long press manipulation or the short press manipulation. According to an exemplary embodiment, if the presently indicated manipulation area is the same as immediately-previous manipulation area, the processor 140 may determine whether a receive time interval between time points, at which the present touch coordinates and the immediately-previous touch coordinates are received, is less than the threshold time interval. If the receive time interval between the present touch coordinates and the immediately-previous touch coordinates is less than the threshold time interval, the processor 140 may determine the user input as being the long press manipulation.

According to another exemplary embodiment, if the receive time intervals between the present touch coordinates and the immediately-previous touch coordinates is equal to or greater than the threshold time interval, the processor 140 may determine the user input as being the short press manipulation. According to another exemplary embodiment, the processor 140 may be configured to distinguish between the long press manipulation and the short press manipulation based on the touch coordinates of the manipulation in a manner different from the above manner. For example, the processor 140 may distinguish between the long press manipulation and the short press manipulation based on the change pattern of the touch coordinates.

In addition, according to another exemplary embodiment, the touch pad 110B may be provided in the form of the touch screen. However, unlike, even if the touch pad 110B is configured separately from the display 130, if the manipulation area 131, 133, 135, or 137 of the touch pad 110B is associated with an object of the display 130 corresponding to the manipulation area 131, 133, 135, or 137, the touch pad 110B may be provided separately from the display 130.

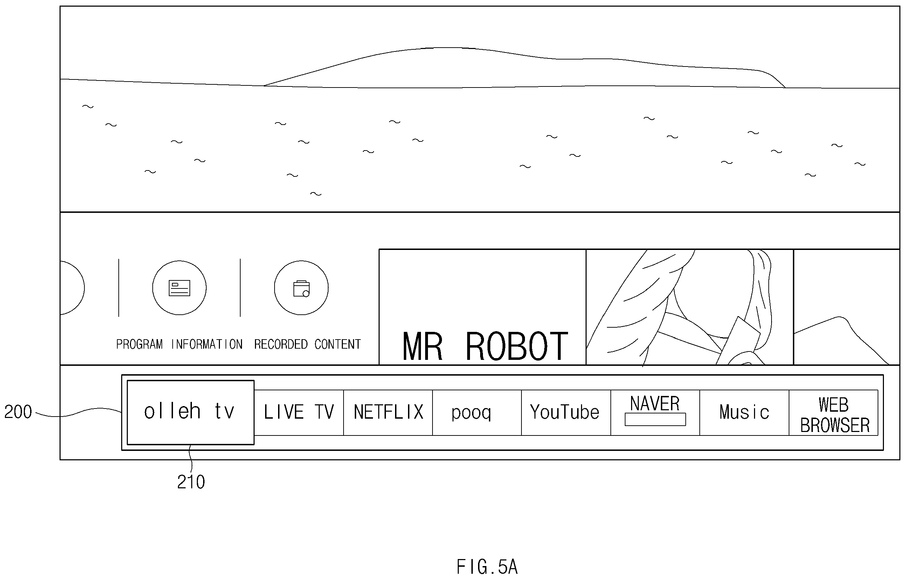

FIGs. 5A to 5C are views illustrating the user interface screen corresponding to the long press manipulation, according to an exemplary embodiment.

Referring to FIG. 5A, according to an exemplary embodiment, if the processor 140 recognizes the short press manipulation for indicating one object on an object list 200, the processor 140 may highlight an indicated object 210 on the object list 200, which corresponds to the user input, in terms of the size of the indicated object. For example, the processor 140 may display an indicated object 210 such that the indicated object 210 is larger than another object (e.g., "Live TV") in size.

According to an exemplary embodiment, when a first function of indicating an object on the object list 200 is performed, the processor 140 may highlight and display a default initial object among objects enrolled on the object list 200. For example, the short press manipulation for performing the first function may be short press manipulation according to the manipulation of a home key of a remote controller.

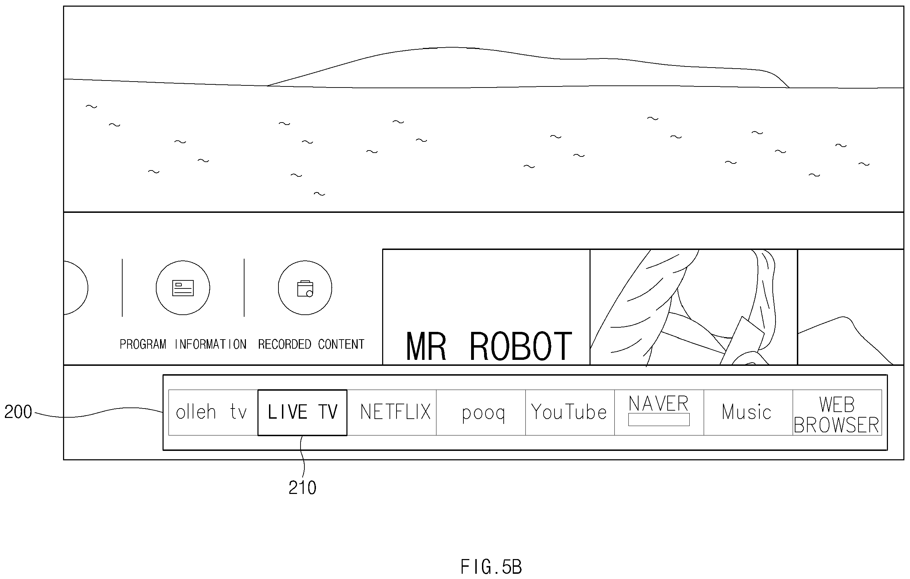

Referring to FIG. 5B, when the processor 140 determines the user input as being the long press manipulation, the processor 140 may display the indicated object by changing the position of the indicated object in the direction corresponding to the long press manipulation. The processor 140 may display the indicated object in the same size as each of the other objects while displaying the indicated object with a transparency lower than the transparency of the other objects. For example, as illustrated in FIG. 5B, the processor 140 may display the indicated object 210 with a first transparency and may display the other objects with a second transparency that is greater than the first transparency. Therefore, according to an exemplary embodiment, the indicated object 210 may be highlighted and displayed, and strain on the eyes of the user may be reduced.

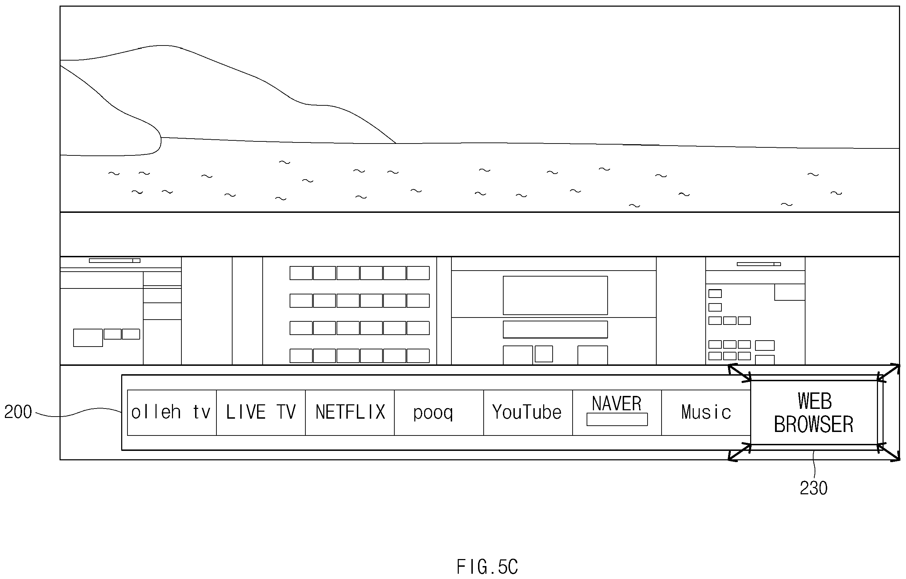

Referring to FIG. 5C, the processor 140 may perform bounce-back processing with respect to a final object 230. The final object 230 is indicated immediately before the long press manipulation is stopped. For example, indicated by arrows in the corners of the final object 230 in FIG. 5C, the processor 140 may increase the size of the final object 230 from the second size to the third size through a plurality of steps and then may decrease from the third size to the second size through a plurality of steps. The second size may be a size exceeding the sizes of the other objects on the object list 200. The second size may be a size for highlighting the indicated object according to the short press manipulation. As described above, according to an exemplary embodiment, a user interface for distinguishing between the execution of the long press manipulation and the completion of the long press manipulation may be provided.

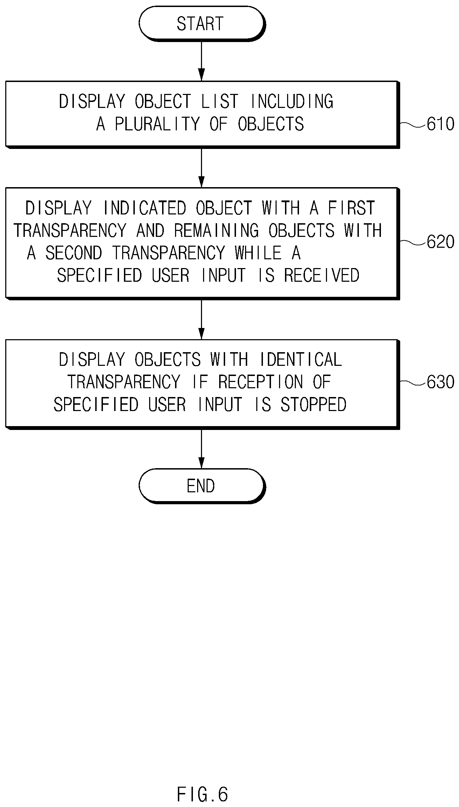

FIG. 6 is a flowchart illustrating an object display method according to an exemplary embodiment.

Referring to FIG. 6, in operation 610, the processor 140 may display an object list including a plurality of objects.

In operation 620the processor 140 may display an indicated object with the first transparency and may the remaining objects with the second transparency while the specified user input is received.

In operation 630, if the reception of the specified user input is stopped, the processor 140 may display the objects with the same transparency.

The term "module" may represent, for example, a unit including one or more combinations of hardware, software and firmware. The term "module" may be interchangeably used with the terms "unit", "logic", "logical block", "component" and "circuit". The "module" may be a minimum unit of an integrated component or may be a part thereof. The "module" may be a minimum unit for performing one or more functions or a part thereof. The "module" may be implemented mechanically or electronically. For example, the "module" may include at least one of an application-specific IC (ASIC) chip, a field-programmable gate array (FPGA), and a programmable-logic device for performing some operations, which are known or will be developed.

At least a part of an apparatus (e.g., modules or functions thereof) or a method (e.g., operations) according to an exemplary embodiment may be, for example, implemented by instructions stored in a computer-readable storage media in the form of a program module. The instruction, when executed by a processor 140, may cause the one or more processors to perform a function corresponding to the instruction. The computer-readable storage media, for example, may be the memory 120.

A computer-readable recording medium may include a hard disk, a floppy disk, a magnetic media (e.g., a magnetic tape), an optical media (e.g., a compact disc read only memory (CD-ROM) and a digital versatile disc (DVD), a magneto-optical media (e.g., a floptical disk)), and hardware devices (e.g., a read only memory (ROM), a random access memory (RAM), or a flash memory). Also, a program instruction may include not only a mechanical code such as generated by a compiler but also a high-level language code executable on a computer using an interpreter. The above hardware unit may be configured to operate via one or more software modules for performing an operation according to an exemplary embodiment, and vice versa.

A module or a program module according to an exemplary embodiment may include at least one of the above elements, or a part of the above elements may be omitted, or additional other elements may be further included. Operations performed by a module, a program module, or other elements may be executed sequentially, in parallel, repeatedly, or in a heuristic method. In addition, some operations may be executed in different sequences or may be omitted. Alternatively, other operations may be added.

Exemplary embodiments have been shown and described above, however it will be understood by those skilled in the art that various changes in form and details may be made therein without departing from the scope of the present disclosure as defined by the appended claims.

## Claims

1. A display device (10) comprising:
a display (130);
a communication interface (110A) configured to receive a user input from a remote controller (400); and
a processor (140) configured to:
control the display (130) to display a plurality of objects (200);
sequentially receive a first user input and a second user input through the communication interface (110A) and determine a receive time interval between a time at which the first and second user inputs are received;
based on the second user input being the same as the first user input, and the receive time interval being less than a threshold time interval, identify the second user input as a long press user input for a directional key;
based on the second user input not being the same as the first user input, or the receive time interval being equal to or greater than the threshold time interval, identify the second user input as a short press user input for the directional key;
wherein when the second user input is identified as the long press user input, the processor (140) is configured to control the display (130) to display an indicated object (210) of the plurality of objects (200) with a first transparency and remaining objects of the plurality of objects (200) with a second transparency while the second user input is received through the communication interface, wherein which of the plurality of objects is the indicated object is sequentially changed and a size of the plurality of remaining objects is not changed based on the second user input continuing to be received through the communication interface; and
wherein when the second user input is identified as the short press user input, the processor (140) is configured to control the display (130) to display an indicated object (210) corresponding to the second user input of the plurality of objects as a first size and remaining objects of the plurality of objects (200) as a second size which is less than the first size.

2. The display device (10) of claim 1, wherein when the second user input is identified as the long press user input, wherein the processor (140) is further configured to adjust at least one parameter of the indicated object (210 of Fig. 5B) to be different from the remaining objects, the at least one parameter among a blurring value, and an overlap.

3. The display device (10) of claim 1, wherein the processor (140) is further configured to control the display to highlight the indicated object (210 of Fig. 5B).

4. The display device (10) of claim 1, wherein the processor (140) is further configured to:
control the size of the indicated object (210 of Fig. 5B) to be the first size and the indicated object (210) to be the second size which is less than the first size in response to reception of the second user input stopping.

5. The display device (10) of claim 1, wherein the processor (140) is further configured to:
control the display to display the remaining objects as two-dimensional images and the indicated object (210 of Fig. 5B) as a three-dimensional image in response to reception of the second user input stopping.

6. The display device (10) of claim 1, wherein the processor (140) is further configured to perform bounce-back processing in a first direction or a reverse direction of the first direction with respect to at least one among the indicated object (210) and the remaining objects in response to the indicated object (210) being last on an object list comprising the plurality of objects (200) when viewed in the first direction.

7. A method of displaying an object by a display device (10) which is in communication with a remote controller (400), the method comprising:
displaying a plurality of objects (200);
sequentially receiving a first user input and a second user input from the remote controller (400) and determining a receive time interval between a time at which the first and second user inputs are received; and
based on the second user input being the same as the first user input, and the receive time interval being less than a threshold time interval, identifying the second user input as a long press user input for a directional key, and displaying an indicated object (210) of the plurality of objects (200) with a first transparency and remaining objects of the plurality of objects (200) with a second transparency, wherein which of the plurality of objects is the indicated object is sequentially changed and a size of the remaining plurality of objects is not changed based on the second user input continuing to be received; or
based on the second user input not being the same as the first user input, or the receive time interval being equal to or greater than the threshold time interval, identifying the second user input as a short press user input for the directional key, and displaying an indicated object (210 of Fig. 5A) corresponding to the second user input of the plurality of objects as a first size and remaining objects of the plurality of objects (200) as a second size which is less than the first size.

## Patentansprüche

1. Anzeigevorrichtung (10), umfassend:
eine Anzeige (130);
eine Kommunikationsschnittstelle (110A), die konfiguriert ist, um eine Benutzereingabe von einer Fernbedienung (400) zu empfangen; und
einen Prozessor (140) die konfiguriert ist, um:
die Anzeige (130) zu steuern, um eine Vielzahl von Objekten (200) anzuzeigen;
eine erste Benutzereingabe und eine zweite Benutzereingabe sequentiell über die Kommunikationsschnittstelle (110A) zu empfangen, und ein Empfangszeitintervall zwischen einer Zeit zu bestimmen, zu der die ersten und zweiten Benutzereingaben empfangen werden;
basierend darauf, dass die zweite Benutzereingabe mit der ersten Benutzereingabe identisch ist, und das Empfangszeitintervall kleiner als ein Schwellenzeitintervall ist, die zweite Benutzereingabe als eine Benutzereingabe mit langem Drücken für eine Richtungstaste zu identifizieren;
basierend darauf, dass die zweite Benutzereingabe nicht mit der ersten Benutzereingabe identisch ist, oder das Empfangszeitintervall gleich oder größer als das Schwellenzeitintervall ist, die zweite Benutzereingabe als eine Benutzereingabe mit kurzem Drücken für die Richtungstaste zu identifizieren;
wobei, wenn die zweite Benutzereingabe als die Benutzereingabe mit langem Drücken identifiziert wird, der Prozessor (140) konfiguriert ist, um die Anzeige (130) zu steuern, um ein angegebenes Objekt (210) der Vielzahl von Objekten (200) mit einer ersten Transparenz und verbleibende Objekte der Vielzahl von Objekten (200) mit einer zweiten Transparenz anzuzeigen, während die zweite Benutzereingabe über die Kommunikationsschnittstelle empfangen wird, wobei, dasjenige der Vielzahl von Objekten, welches das angegebene Objekt ist, nacheinander geändert wird und eine Größe der Vielzahl von verbleibenden Objekten basierend auf der zweiten Benutzereingabe, die weiterhin über die Kommunikationsschnittstelle empfangen wird, nicht geändert wird; und
wobei, wenn die zweite Benutzereingabe als die Benutzereingabe mit kurzem Drücken identifiziert wird, der Prozessor (140) konfiguriert ist, um die Anzeige (130) zu steuern, um ein angegebenes Objekt (210) entsprechend der zweiten Benutzereingabe der Vielzahl von Objekten als erste Größe und verbleibende Objekte der Vielzahl von Objekten (200) als zweite Größe, die kleiner als die erste Größe ist, anzuzeigen.

2. Anzeigevorrichtung (10) nach Anspruch 1, wobei, wenn die zweite Benutzereingabe als die Benutzereingabe mit langem Drücken identifiziert wird, wobei der Prozessor (140) ferner konfiguriert ist, um mindestens einen Parameter des angegebenen Objekts (210 von Fig. 5B) so einzustellen, dass er sich von den verbleibenden Objekten unterscheidet, der mindestens eine Parameter unter einem Unschärfewert und einer Überlappung.

3. Anzeigevorrichtung (10) nach Anspruch 1, wobei der Prozessor (140) ferner konfiguriert ist, um die Anzeige zu steuern, um das angegebene Objekt (210 von Fig. 5B) hervorzuheben.

4. Anzeigevorrichtung (10) nach Anspruch 1, wobei der Prozessor (140) ferner konfiguriert ist, zu steuern:
dass die Größe des angegebenen Objekts (210 von 5B) die erste Größe wird und das angegebene Objekt (210) die zweite Größe wird, die kleiner als die erste Größe ist, als Reaktion auf den Empfang des Stopps der zweiten Benutzereingabe zu stoppen.

5. Anzeigevorrichtung (10) nach Anspruch 1, wobei der Prozessor (140) ferner konfiguriert ist, um:
die Anzeige zu steuern, um die verbleibenden Objekte als zweidimensionale Bilder und das angegebene Objekt (210 von 5B) als dreidimensionales Bild als Reaktion auf den Empfang des Stopps der zweiten Benutzereingabe anzuzeigen.

6. Anzeigevorrichtung (10) nach Anspruch 1, wobei der Prozessor (140) ferner konfiguriert ist, um eine Rückprallverarbeitung in einer ersten Richtung oder einer umgekehrten Richtung der ersten Richtung in Bezug auf mindestens eines des angegebenen Objekts (210) und der verbleibenden Objekte als Antwort darauf durchzuführen, dass das angegebene Objekt (210) das letzte auf einer Objektliste ist, die die Vielzahl von Objekten (200) umfasst, wenn sie in der ersten Richtung betrachtet werden.

7. Verfahren zum Anzeigen eines Objekts durch eine Anzeigevorrichtung (10), die mit einer Fernbedienung (400) in Kommunikation steht, wobei das Verfahren Folgendes umfasst:
Anzeigen einer Vielzahl von Objekten (200);
sequentielles Empfangen einer ersten Benutzereingabe und einer zweiten Benutzereingabe von der Fernbedienung (400) und Bestimmen eines Empfangszeitintervalls zwischen einer Zeit, zu der die ersten und zweiten Benutzereingaben empfangen werden; und
basierend darauf, dass die zweite Benutzereingabe mit der ersten Benutzereingabe identisch ist und das Empfangszeitintervall kleiner als ein Schwellenzeitintervall ist, Identifizieren der zweiten Benutzereingabe als eine Benutzereingabe mit langem Drücken für eine Richtungstaste, und Anzeigen eines angegebenen Objekts (210) der Vielzahl von Objekten (200) mit einer ersten Transparenz und verbleibender Objekte der Vielzahl von Objekten (200) mit einer zweiten Transparenz, wobei, dasjenige der mehreren Objekte, welches das angegebene Objekt ist, nacheinander geändert wird und eine Größe der verbleibenden Vielzahl von Objekten basierend auf der zweiten Benutzereingabe nicht geändert wird, die weiterhin empfangen wird; oder
basierend darauf, dass die zweite Benutzereingabe nicht mit der ersten Benutzereingabe identisch ist, oder das Empfangszeitintervall gleich oder größer als das Schwellenzeitintervall ist, Identifizieren der zweiten Benutzereingabe als eine Benutzereingabe mit kurzem Drücken für die Richtungstaste, und Anzeigen eines angegebenen Objekts (210 von Fig. 5A) entsprechend der zweiten Benutzereingabe der Vielzahl von Objekten als erste Größe und verbleibender Objekte der Vielzahl von Objekten (200) als zweite Größe, die kleiner als die erste Größe ist.

## Revendications

1. Dispositif d'affichage (10) comprenant :
un écran (130) ;
une interface de communication (110A) configurée pour recevoir une entrée utilisateur provenant d'une télécommande (400) ; et
un processeur (140) configuré pour :
commander l'écran (130) pour afficher une pluralité d'objets (200) ;
recevoir séquentiellement une première entrée utilisateur et une seconde entrée utilisateur via l'interface de communication (110A) et déterminer un intervalle de temps de réception entre un moment auquel la première entrée utilisateur et la seconde entrée utilisateur sont reçues ;
sur la base du fait que la seconde entrée utilisateur est la même que la première entrée utilisateur, et que l'intervalle de temps de réception est inférieur à un intervalle de temps seuil, identifier la seconde entrée d'utilisateur comme étant une entrée utilisateur à appui long pour une touche directionnelle ;
sur la base du fait que la seconde entrée utilisateur n'est pas la même que la première entrée utilisateur, ou que l'intervalle de temps de réception est égal ou supérieur à l'intervalle de temps seuil, identifier la seconde entrée d'utilisateur comme étant une entrée utilisateur à appui court pour la touche directionnelle ;
dans lequel lorsque la seconde entrée utilisateur est identifiée comme étant l'entrée d'utilisateur à appui long, le processeur (140) est configuré pour commander l'écran (130) pour afficher un objet indiqué (210) parmi la pluralité d'objets (200) avec une première transparence et les objets restants de la pluralité d'objets (200) avec une seconde transparence tandis que la seconde entrée utilisateur est reçue via l'interface de communication, dans lequel celui parmi la pluralité d'objets qui est l'objet indiqué est modifié séquentiellement et une taille de la pluralité d'objets restants est non modifiée sur la base du fait que la seconde entrée utilisateur continue à être reçue via l'interface de communication ; et
dans lequel lorsque la seconde entrée utilisateur est identifiée comme étant l'entrée utilisateur à appui court, le processeur (140) est configuré pour commander l'écran (130) pour afficher un objet indiqué (210) correspondant à la seconde entrée utilisateur de la pluralité d'objets avec une première taille et les objets restants de la pluralité d'objets (200) avec une seconde taille qui est inférieure à la première taille.

2. Dispositif d'affichage (10) selon la revendication 1, dans lequel, lorsque la seconde entrée utilisateur est identifiée comme étant l'entrée utilisateur à appui long, dans lequel le processeur (140) est en outre configuré pour ajuster au moins un paramètre de l'objet désigné (210 de la figure 5B) pour qu'il soit différent des objets restants, l'au moins un paramètre étant parmi une valeur de flou et un chevauchement.

3. Dispositif d'affichage (10) selon la revendication 1, dans lequel le processeur (140) est en outre configuré pour commander l'écran afin de mettre en évidence l'objet indiqué (210 de la figure 5B).

4. Dispositif (10) selon la revendication 1, dans lequel le processeur (140) est en outre conçu pour :
commander la taille de l'objet indiqué (210 sur la figure 5B) pour qu'elle soit la première taille et l'objet indiqué (210) pour qu'il soit la seconde taille qui est inférieure à la première taille en réponse à l'arrêt de la réception de la seconde entrée utilisateur.

5. Dispositif d'affichage (10) selon la revendication 1, dans lequel le processeur (140) est en outre configuré pour :
commander l'écran pour afficher les objets restants sous la forme d'images bidimensionnelles et l'objet indiqué (210 de la figure 5B) sous la forme d'une image tridimensionnelle en réponse à l'arrêt de la réception de la seconde entrée utilisateur.

6. Dispositif d'affichage (10) selon la revendication 1, dans lequel le processeur (140) est en outre configuré pour effectuer un traitement de renvoi dans une première direction ou une direction inverse de la première direction par rapport à au moins un des objets indiqués (210) et les objets restants en réponse à l'objet indiqué (210) étant les derniers sur une liste d'objets comprenant la pluralité d'objets (200) lorsqu'ils sont visualisés dans la première direction.

7. Procédé d'affichage d'un objet par un dispositif d'affichage (10) qui est en communication avec une télécommande (400), le procédé comprenant :
l'affichage d'une pluralité d'objets (200) ;
la réception séquentielle d'une première entrée utilisateur et d'une seconde entrée utilisateur via l'interface de communication (400) et la détermination d'un intervalle de temps de réception entre un moment auquel la première entrée utilisateur et la seconde entrée utilisateur sont reçues ;
sur la base du fait que la seconde entrée utilisateur est la même que la première entrée utilisateur, et que l'intervalle de temps de réception est inférieur à un intervalle de temps seuil, l'identification de la seconde entrée utilisateur comme étant une entrée utilisateur à appui long pour la touche directionnelle, et l'affichage d'un objet indiqué (210) parmi la pluralité d'objets (200) avec une première transparence et les objets restants de la pluralité d'objets (200) avec une seconde transparence, dans lequel celui parmi la pluralité d'objets qui est l'objet indiqué est modifié séquentiellement et une taille du reste la pluralité d'objets n'est pas modifiée sur la base du fait que la seconde entrée d'utilisateur continue à être reçue ; ou
sur la base du fait que la seconde entrée utilisateur n'est pas la même que la première entrée utilisateur, ou que l'intervalle de temps de réception est égal ou supérieur à l'intervalle de temps seuil, l'identification de la seconde entrée utilisateur comme étant une entrée utilisateur à pression courte pour la touche directionnelle, et l'affichage d'un objet indiqué (210 de la figure 5A) correspondant à la seconde entrée utilisateur de la pluralité d'objets avec une première taille et les objets restants de la pluralité d'objets (200) avec une seconde taille qui est inférieure à la première taille.
